(19) Europäisches Patentamt
European Patent Office
Office européen des brevets

(11) EP 1 855 457 B1

(12) **EUROPEAN PATENT SPECIFICATION**

(45) Date of publication and mention
of the grant of the patent:
**08.07.2009   Bulletin 2009/28**

(51) Int Cl.:
***H04M 9/08*** (2006.01)

(21) Application number: **06009692.2**

(22) Date of filing: **10.05.2006**

(54) **Multi channel echo compensation using a decorrelation stage**

Kompensation von Mehrkanalechos durch Dekorrelation

Annulation d'écho à canaux multiples à l'aide d'une étape de décorrélation

<table>
<tr><td>

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**14.11.2007   Bulletin 2007/46**

(73) Proprietor: **Harman Becker Automotive Systems GmbH**
**76307 Karlsbad (DE)**

(72) Inventors:
- **Schmidt, Gerhard Uwe**
  **89081 Ulm (DE)**
- **Haulick, Tim**
  **89143 Blaubeuren (DE)**
- **Buck, Markus**
  **88400 Biberach (DE)**
- **Rössler, Martin**
  **89077 Ulm (DE)**
- **Köpf, Hans-Jörg**
  **73340 Amstetten (DE)**

(74) Representative: **Grünecker, Kinkeldey, Stockmair & Schwanhäusser**
**Anwaltssozietät**
**Leopoldstrasse 4**
**80802 München (DE)**

</td><td>

(56) References cited:
**US-A1- 2002 176 585**         **US-A1- 2003 021 389**
**US-A1- 2003 185 402**

- **GANSLER T ET AL: "An adaptive nonlinearity solution to the uniqueness problem of stereophonic echo cancellation" 2002 IEEE INTERNATIONAL CONFERENCE ON ACOUSTICS, SPEECH, AND SIGNAL PROCESSING. PROCEEDINGS. (ICASSP). ORLANDO, FL, MAY 13 - 17, 2002, IEEE INTERNATIONAL CONFERENCE ON ACOUSTICS, SPEECH, AND SIGNAL PROCESSING (ICASSP), NEW YORK, NY : IEEE, US, vol. VOL. 4 OF 4, 13 May 2002 (2002-05-13), pages II-1885, XP010804264 ISBN: 0-7803-7402-9**
- **SCHMIDT ET AL: "Signal processing for in-car communication systems" SIGNAL PROCESSING, ELSEVIER SCIENCE PUBLISHERS B.V. AMSTERDAM, NL, vol. 86, no. 6, June 2006 (2006-06), pages 1307-1326, XP005365816 ISSN: 0165-1684**
- **BILBAO, STEFAN: "TIME-VARYING GENERALIZATIONS OF ALL-PASS FILTERS" IEEE SIGNAL PROCESSING LETTERS, vol. 12, no. 5, May 2005 (2005-05), XP011130100**

</td></tr>
</table>

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to a system and a method for signal processing, in particular, speech signal processing, with acoustic echo compensation. The invention particularly relates to echo compensation in multi-channel systems exhibiting correlation between the individual channels.

### Background of the Invention

Echo compensation is a basic topic in audio signal processing in communication systems comprising microphones that detect not only the desired signal, e.g., a speech signal of a user of a speech recognition system or a hands-free set, but also disturbing signals output by loudspeakers of the same communication system. In case of a hands-free set, e.g., it is not desired that signals received from a remote party and output by loudspeakers at the near end are fed again in the system by microphones at the near end and transmitted back to the remote party. Detection of signals by the microphones that are output by the loudspeakers can result in annoying acoustic echoes that even may cause a complete breakdown of the communication, if the acoustic echoes are not significantly attenuated or substantially removed.

In the case of a speech recognition system used in a noisy environment a similar problem occurs. It has to be prevented that signals different from the speech signals of a user are supplied to the recognition unit. The microphone(s) of the speech recognition system, however, might detect loudspeaker outputs representing, e.g., audio signals reproduced by audio devices as CD or DVD player or a radio. If these signals were not sufficiently filtered, the wanted signal representing the utterance of a user would probably be embedded in noise to a degree that renders appropriate speech recognition impossible.

Several methods for echo compensation have been proposed and implemented in communication systems in recent years. Adaptive filters are employed for echo compensation of acoustic signals (see, e.g., Acoustic Echo and Noise Control, E. Hänsler and G. Schmidt, John Wiley & Sons, New York, 2004) that are used to model the transfer function of the loudspeaker-room-microphone (LRM) - system by means of an adaptive finite impulse response (FIR) filter. If multiple loudspeaker signals output by a number of loudspeakers separately, one filter has to be employed for each loudspeaker.

US 2003/0021389 A1 discloses a principal component analysis of two signals and the conversion of the signals converted into two signals being put in an orthogonal relation, thereby generating two signals being non-correlated. Those two signals are reproduced by speakers, and the voice generated from the speakers are collected by microphones. The cross spectra of a signal as the result of subtracting an echo canceling signal from a voice collected by each microphone, and a voice before it is generated from the speaker, are obtained. Those cross spectra are ensemble-averaged for a predetermined period of time, and inverse Fourier transformed, thereby producing impulse response estimation errors of each filter. Impulse responses of those filters are updated so as to cancel those impulse response estimation errors

US 2003/0185402 A1 discloses a distortion manager and a method of managing distortion for use with an acoustic echo canceller. In one embodiment, the distortion manager includes a coherence ascertainer coupled to an adaptive distortion adder. The coherence ascertainer determines a coherency between audio streams and the adaptive distortion adder selectively adds non-linear distortion to at least one of the audio streams based on the coherency.

In multi channel systems, however, a severe problem arises when the individual channels show significant correlation as, e.g., in the case of multiple microphones detecting the utterances of a speaker. In the case of correlation between individual channels, the process of adapting the echo compensation filters, i.e. the recursive calculation of the respective filter coefficients, may not converge to the desired impulse response of the LRM system, since, e.g., portions of the signals output by one loudspeaker and detected by one microphone might be compensated by an echo compensation filter intended to echo compensate signals output by another loudspeaker and detected by another microphone.

In multi channel communication the optimization of the echo compensation filtering means, in particular, depends on the exact position of a speaker. Thus, any movement of the speaker requires a re-calculation of the filter coefficients.

The above-mentioned convergence problem results from the non-uniqueness of the adaptation problem. Known approaches to re-establish uniqueness include time delay of the signals in individual channels and the introduction on non-linearities in the channel paths (see, e.g., Investigation of Several Types of Nonlinearities for Use in Acoustic Echo Cancellation, D.R. Morgan, J.L. Hall and J. Benesty, IEEE Transactions on Speech and Audio Processing, Vol. 9, No. 6, p. 686, September 2001; A Stereo Echo Canceller with Correct Echo-Path Identification Based on an Input Sliding Technique, A. Sugiyama, Y. Joncour and A. Hirano, IEEE Transactions on Signal Processing, Vol. 49, No. 11, p. 2577, November 2001).

The main drawback of such methods, however, is given by the fact that such kinds of de-correlation of the multi channel signals necessarily introduce perceivable artifacts that deteriorate the quality of the reproduced audio signals and, in particular, the intelligibility of speech signals.

Thus, despite the engineering process in recent years there is still a problem in de-correlating multi channel signals without deteriorating the output audio signals significantly.

## Description of the Invention

The above mentioned problem is solved by a method for multi channel echo compensation according to claim 1 comprising providing a first audio signal ($x_1$) in a first channel and a second audio signal ($x_2$) in a second channel; de-correlating the first ($x_1$) and the second ($x_2$) audio signals to generate a first ($\tilde{x}_1$) de-correlated audio signal and a second ($\tilde{x}_2$) de-correlated audio signal;

outputting the first de-correlated audio signal ($\tilde{x}_1$) by a first loudspeaker to generate a first loudspeaker signal and the second de-correlated audio signal ($\tilde{x}_2$) by a second loudspeaker to generate a second loudspeaker signal;

detecting the first and second loudspeaker signals and a wanted signal by at least one microphone to generate at least one microphone signal ($y$); and

echo compensating the at least one microphone signal ($y$) by adapting the filter coefficients of an echo compensation filtering means to generate an echo compensated signal ($e$);

wherein

the de-correlating of the first ($x_1$) and the second ($x_2$) audio signals includes controlling the value of a time-varying parameter ($\beta$) on the basis of an adaptation state of the echo compensation filtering means (20) and generating the first and second de-correlated audio signals ($\tilde{x}_1, \tilde{x}_2$) by applying time-varying all-pass filtering followed by adaptive non-linear processing to the provided first and second audio signals ($x_1, x_2$), said time-varying all-pass filtering using the time-varying parameter ($\beta$).

The two channels may be two stereo channels or two of multiple channels of a multi channel audio system. At least one loudspeaker is provided for each individual channel. A microphone is intended to detect a wanted signal different from the loudspeaker signals and it undesirably also detects loudspeaker signals that are to be reduced or substantially removed from the microphone signal by echo compensating.

The echo compensation is performed by an adaptive echo compensation filtering means. The echo compensation filter coefficients are adjusted dynamically for each channel separately in order to improve the quality of the microphone signal, in particular, the intelligibility of a speech signal detected by the microphone and subsequently transmitted, e.g., to a remote party in the context of a communication system.

The first and second audio signals are de-correlated in dependence on the performance of the echo compensation filtering means, i.e. the adaptation state due to the dynamically adapted filter coefficients. If the echo compensation filtering means is not well adapted for echo compensating the microphone signal, the de-correlating will relatively strongly modify the provided audio signals. If, e.g., the performance of the echo compensation filtering means is considered satisfying, the de-correlating may even by omitted (for determining the performance / adaptation state of the echo compensation filtering means see discussion below).

By de-correlating the audio signals in a dynamic response to the echo compensation, the quality of the obtained echo compensated microphone signal is enhanced significantly and reliably. Moreover, artifacts introduced by the de-correlation step can be reduced to a minimum that is necessary to guarantee the intelligibility of echo compensated speech signals. These signals can, e.g., be transmitted via a telephone to a remote party.

Preferably, the correlation of the provided audio signals can be determined and the de-correlating can be controlled in dependence on the determination result. The correlation degree may be determined as it will be discussed below. If the correlation is considered negligible, no de-correlating is necessary at all. In this case processing is most simple and no artifacts are introduced by the de-correlating step. Strong correlation, on the other hand, demands for significant de-correlation still performed in dependence on the adaptation state of the echo compensation filtering means.

The correlation, in general, may be calculated by the short time correlation of the provided audio signals. Alternatively, the correlation property may be judged from the short time coherence (herein considered as a measure for the correlation of the provided signals) and the de-correlating may be only performed, if the short time correlation or short time coherence or a mean value of one of these is determined to exceed a pre-determined level.

The mean short time coherence can be defined by averaging over frequency and time after discrete Fourier transformation in a sub-band $\mu$

$$\overline{C}(n) = \lambda\,\overline{C}(n-1) + (1-\lambda) \sum_{\mu=0}^{N_{DFT}/2} C(\Omega_\mu, n)$$

with

$$C(\Omega_\mu,n) \approx \frac{\left|< X_1(\Omega_\mu,n)\, X^*_2(\Omega_\mu,n) >\right|^2}{<\left|X_1(\Omega_\mu,n)\right|^2 > \ <\left|X_2(\Omega_\mu,n)\right|^2 >}, \text{ with } \mu \in \left[0, \frac{N_{DFT}}{2}\right]$$

with the Fourier spectra $X_{1,2}(\Omega_\mu,n)$ for the $\mu$-th sub-band with the center frequency $\Omega_\mu$ of the discrete time point (sampling instant n). The symbol < > indicates smoothing in time, e.g., by a 1st order infinite impulse response filter, and the asterisk the complex conjugate. The number of the nodes (sampling points) of the discrete Fourier transform (DFT) spectra is given by $N_{DFT}$ and $\lambda$ denotes an arbitrary time constant, e.g., chosen from [0.0, 0.99]. Reasonable values for the pre-determined threshold lie within [0.96, 0.99].

In experiments, the short time coherence has proven to be a suitable measure (control parameter) for controlling the de-correlating step in terms of the quality of the echo compensated microphone signal.

The de-correlating step may comprise or consist of time varying filtering and/or adaptive non-linear processing of the provided first and second audio signal. The parameters of the non-linear processing and the filter coefficients of the time-varying filtering are different for the provided first and the second audio signal. It is again stated that the disclosed method can be applied to more than two channels. By time-varying filtering a delay of the signal is introduced. By non-linear processing a non-linearity is introduced in the signal path of the first and the second audio signal $X_1$ and $X_2$, e.g., according to

$$\tilde{x}_{1,2}(n) = \begin{cases} (1+\alpha_{1,2})\, x_{1,2}(n), & \text{if } x_{1,2}(n) > 0 \\ \\ x_{1,2}(n), & \text{else} \end{cases}$$

where the tilde denotes the eventually de-correlated signals and $\alpha$ is an arbitrary parameter representing the degree of the non-linearity.

These kinds of de-correlating multi channel audio signals are very effective and relatively robust in terms of convergence. In particular, the time-varying filtering may be carried out in a very efficient way by all-pass filtering according to x' (n) _ -$\beta$(n) x(n) + x(n-1) + $\beta$(n) x'(n-1) where $\beta$ is a time-varying parameter, n is the discrete time index, x is an audio signal of one channel and the prime denotes the filtered audio signal. The coefficient $\beta$ is to be chosen different for each channel and may be varied slowly in time with, e.g., $\beta \in$ [-0.1, 0.1 ].

According to one preferred example of the herein disclosed method that has proven very successful in enhancing the quality of the echo compensated microphone signal the following steps are performed subsequently:

   determining the correlation of the first and the second audio signals and, only if the determined correlation is above a pre-determined threshold;

   time-varying filtering the first audio signal and/or the second audio signal; and

   adaptive non-linear processing of the filtered first and/or the second audio signals

wherein the degree of the non-linearity depends on performance of the echo compensation filtering means and, thus, on the adapted filter coefficients of the echo compensation filtering means.

As mentioned above the de-correlating, e.g., the choice of the degrees of the employed non-linearity $\alpha$ and/or the time-varying filtering $\beta$, may be performed in dependence on the adaptation state / performance of the echo compensation filtering means given by the adapted echo compensation filter coefficients.

In several studies it turned out that a suitable measure for the adaptation state is given by the system distance defined as

$$D(n) = 10 \log_{10} \left( \frac{N}{N_T} \sum_{i=0}^{N_T-1} \left( \hat{h}^2_{1,i}(n) + \hat{h}^2_{2,i}(n) \right) \right)$$

where n is the discrete time index, N is the length of the echo compensation filtering means (i.e. number of filter coefficients), $N_T$ is a pre-determined number of sampling times and $h_1(n)$ and $h_2(n)$ denote the filter coefficients (representing the impulse responses) of the echo compensation filtering means for the first and the second channel, respectively.

If after some period of a communication between a near and a remote party, a satisfying echo compensation at the near side was obtained, further de-correlating may become less important at the near side (as long as subsequently multi channel audio signals provided by the remote party do not show a drastically increased correlation as compared to previously provided signals). If at a later time the echo compensation fails to sufficiently enhance the quality of the microphone signal, e.g., due to an abrupt movement of the speaker whose utterances represent wanted signals, then de-correlating is re-activated or enforced.

The overall quality of the echo compensated microphone signal can be further enhanced by using one or more directional microphones being part of at least one microphone array and generating different microphone signals and beamforming these signals in order to obtain one beamformed microphone signal including a wanted signal, e.g., the utterance of a speaker, as well as disturbing components to be reduced or substantially eliminated by echo compensation.

The beamforming allows for providing a particular directivity for the microphone array, e.g., by simply delay compensation and summing of the individual microphone signals.

The present invention also provides a computer program product, comprising one or more computer readable media having computer-executable instructions for performing the steps of the examples of the inventive method described above.

The above mentioned problem is also solved by a system for signal processing including multi channel echo compensation, the system comprising a de-correlation means (10) configured to de-correlate audio signals $(x_1, x_2)$ provided by a multi channel source (60) and to generate de-correlated audio signals $(\tilde{x}_1, \tilde{x}_2)$ on the basis of the provided audio signals $(x_1, x_2)$;
an adaptive echo compensation filtering means (20) configured to echo compensate microphone signals generated on the basis of the de-correlated audio signals $(\tilde{x}_1, \tilde{x}_2)$ to obtain an echo-compensated signal (e);
wherein
the de-correlation means (10) is configured to generate the de-correlated audio signals $(\tilde{x}_1, \tilde{x}_2)$ by applying a time-varying all-pass filter (11) followed by an adaptive non-linear processing means to the audio signals $(x_1, x_2)$, wherein the time-varying all-pass filter (11) has a time-varying parameter $(\beta)$ and wherein the system further comprises a control means (50) configured to control the time-varying parameter $(\beta)$ on the basis of an adaptation state of the echo compensation filtering means (20).

The multi channel source may be, e.g., a radio, a CD or DVD player or may be part of a telephone or video conference system. In a telephone or video conference system one channel can be assigned to each of the participants of the conference. The decorrelation means may output the de-correlated signals to loudspeakers, at least one loudspeaker for each channel. Each loudspeaker outputs only signals from one channel. A microphone being part of a loudspeaker room microphone (LRM) system can detect a wanted signal, e.g. a speaker's utterance, and the loudspeaker signals that are generated on the basis of the de-correlated audio signals and, therefore, the microphone generates microphone signals that are also based (via the detected loudspeaker signals) on the de-correlated signals generated by the de-correlation means.

The microphone signal is subsequently processed by the echo compensation filtering means. The signal generated by the echo compensation filtering means can be input in the control means to further control the de-correlating means on the basis of the echo compensated signals generated by the echo compensation filtering means. Thus, the control means can directly judge the quality of the echo compensated signal.

The echo compensation filtering means comprises one set of filter coefficients for each channel separately. Each set has to be dynamically adapted for each individual channel.

The de-correlation means may comprise a time-varying filtering means, in particular, a finite impulse response delay filter with two filter coefficients only, or an all-pass filter and/or a non-linear processing means (see also discussion above).

The control means controls the de-correlation means in dependence on the performance of the echo compensation filtering means given by the adaptation state due to the adapted filter coefficients of the echo compensation filtering means. Thereby, a high quality of the echo compensated microphone signal generated by the echo compensation filtering means can be secured. In particular, in the case of a satisfying adaptation of the echo compensation filtering means the de-correlation means may be controlled to only slightly modify the provided audio signals (e.g. by a relatively small degree of the non-linearity introduced by the non-linear processing means and/or a small time delay caused by the time-varying filtering) or may be even de-activated in order to reduce the introduction of artifacts as much as possible.

The control means may advantageously further be configured to control the decorrelation means on the basis of a correlation state of the audio signals provided by the multi channel source and also to determine the correlation state on the basis of the value or a mean value of the short time correlation or short time coherence of the audio signals provided by the multi channel source.

According to a further example of the inventive system for signal processing the control means may be configured to determine the adaptation state of the adaptive echo compensation filtering means on the basis of the system distance measure

$$D(n) = 10 \log_{10} \left( \frac{N}{N_T} \sum_{i=0}^{N_T-1} \left( \hat{h}^2_{1,i}(n) + \hat{h}^2_{2,i}(n) \right) \right).$$

where n is the discrete time index, N is the length of the echo compensation filtering means, $N_T$ is a pre-determined number of sampling times and $h_1(n)$ and $h_2(n)$ denote the filter coefficients of the echo compensation filtering means for the first and the second channel, respectively. If D(n) exceeds a pre-determined value the control means may control the de-correlation means to only slightly modify audio the provided by the multi channel source or may even de-activate the de-correlation means. If after some time, e.g., caused by changes of the LRM system the distance measure falls below the threshold the de-correlation means is activated (again) or is controlled to de-correlate the provided audio signals more significantly.

The estimation of the system distance as well as the adaptation of the filter coefficients of the time-varying filtering means, in particular, the all-pass filter need not to be performed for each sampling instant but, e.g., once a second only.

The herein disclosed system may in a further embodiment comprise a microphone array comprising at least one directional microphone and a beamforming means configured to receive microphone signals from the microphones of the microphone array and to generate a beamformed microphone signal (y) on the basis of the individual microphone signals. Beamforming is a well-known method to enhance the quality of microphone signals with respect to wanted signals that are embedded in noise.

The system may also comprise a General Sidelobe Canceller, see, e.g., "An alternative approach to linearly constrained adaptive beamforming", by Griffiths, L.J. and Jim, C.W., IEEE Transactions on Antennas and Propagation, vol. 30., p.27, 1982, consisting of two signal processing paths: a first (or lower) adaptive path with a blocking matrix and an adaptive noise cancelling means and a second (or upper) non-adaptive path with a fixed beamformer. Instead of the fixed beamformer an adaptive one might be chosen as well.

The present invention also provides a hands-free set and a speech recognition system each comprising one of the examples of the system for signal processing as described above which is particularly useful is such devices.

Moreover, a vehicle communication system comprising one of the examples of the system described above and/or the mentioned hands-free set and/or the mentioned speech recognition system and a telephone or video conference system comprising one of the examples of the inventive system described above is provided. The conference system may also comprises the hands-free set mentioned above.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 shows a flow diagram illustrating basics of an example of the inventive method comprising time-varying filtering and non-linear processing of an acoustic input signal.

Figure 2 shows an example of the inventive systems for signal processing comprising a de-correlation means controlled by a control means and an echo compensation filtering means.

Figure 3 shows an example of the inventive systems for signal processing comprising a time-varying filtering means and non-linear processing means both controlled by a control means as well as an echo compensation filtering means.

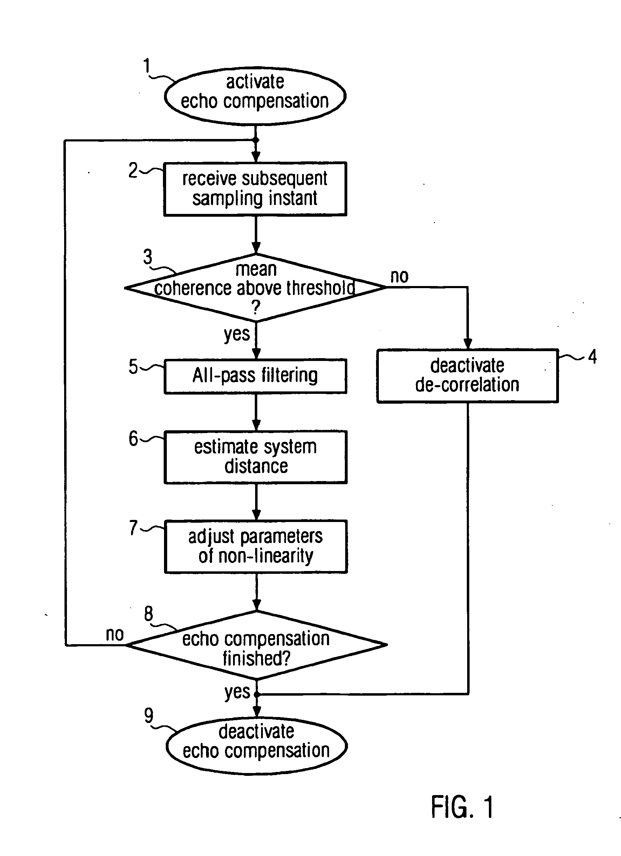

The control according to one example of the method for multi channel echo compensation disclosed herein is described in the following with reference to Fig. 1. Consider a case in which in a loudspeaker-room-microphone system being part of a multi channel communication system a microphone detects loudspeaker signals output by several loudspeakers each outputting a signal of one individual channel.

Echo compensation of the microphone signal generated by the microphone is activated 1, i.e. filter coefficients of an echo compensation filtering means are adjusted in order to reduce acoustic echoes caused by the loudspeaker signals detected by the microphone. After echo compensation has been activated, the next sampling instant or signal frame received 2 from a remote communication party might be pre-processed for de-correlation before output by the loudspeakers. Here and in the following examples, it is assumed that two separate audio channels are present, as in a stereo system. Restriction to two channels is, however, only due to explanatory simplicity and the method and system disclosed herein is by no means actually restricted to two channels.

According to the present example, the mean short time coherence of the signals of the first and the second channel is calculated by averaging over frequency and time

$$\overline{C}(n) = \lambda\, \overline{C}(n-1) + (1-\lambda) \sum_{\mu=0}^{N_{DFT}/2} C(\Omega_\mu, n)$$

with

$$C(\Omega_\mu, n) = \frac{\left| < X_1(\Omega_\mu, n)\, X^*_2(\Omega_\mu, n) > \right|^2}{< \left| X_1(\Omega_\mu, n) \right|^2 > \; < \left| X_2(\Omega_\mu, n) \right|^2 >}, \text{ with } \mu \in \left[ 0, \frac{N_{DFT}}{2} \right]$$

with the Fourier spectra $X_{1,2}(\Omega_\mu, n)$ for the $\mu$-th sub-band with the center frequency $\Omega\mu$ of the discrete time point (sampling instant n). The symbol < > indicates smoothing in time, e.g., by a 1st order infinite impulse response filter, and the asterisk the complex conjugate. The number of the nodes (sampling points) of the discrete Fourier transform (DFT) spectra is given by $N_{DFT}$. It should be noted that in the terminology known by the skilled person $C(\Omega\mu, n)$ is given by the ratio of the root mean square of the cross periodogram, i.e. the root mean square of the complex short time cross power density spectrum, and the product of the auto periodograms. The time constant $\lambda$ may be chosen from [0.9, 99].

If the mean short time coherence exceeds a pre-determined value, e.g., a value chosen from [0.96, 0.99], de-correlation will be performed as described below. If the threshold is not reached, no de-correlation will be performed or any de-correlating performed for former samples will be deactivated 4, respectively.

In the present example, de-correlating is performed at two stages. First, time-varying all-pass filtering is performed 5 for both the signal of the first and the second channel

$$x'_{1,2}(n) = -\beta_{1,2}(n)\, x_{1,2}(n) + x_{1,2}(n-1) + \beta_{1,2}(n)\, x'_{1,2}(n-1)$$

where $x_{1,2}$ is the received signal of the first or the second channel, respectively, $\beta$ is a time-varying parameter that is chosen differently for each channel, n is the discrete time index and the dash indicates the respective filtered signals. If the parameter $\beta$ is changed sufficiently slowly, the modifications of the absolute value of frequency response is negligible.

The parameter $\beta(n)$ may, e.g., be kept constant over multiple sampling instants, say over a period of one second, at a value of $\beta(n) = 0.1$ and will subsequently be changed to $\beta(n) \_ -0.1$ by linear interpolation over 200 sampling instants. Such a modeling hardly results in perceivable artifacts in the loudspeaker signals. However, the obtained de-correlation of the signals of the two channels is not sufficient.

Thus, the time-varying filtering is complemented by non-linear processing 7 of the filtered signals $x'_{1,2}(n)$. It should be noted, however, that the all-pass filtering already secures a minimum convergence velocity for the overall adaptation and the following non-linear processing. The latter is performed by a non-linear characteristic according to

$$\tilde{x}_{1,2}(n) = \begin{cases} (1+\alpha_{1,2})\, x'_{1,2}(n), & \text{if } x'_{1,2}(n) > 0 \\ \\ x'_{1,2}(n), & \text{else} \end{cases}$$

where the tilde denotes the eventually de-correlated signals and $\alpha$ is an arbitrary parameter representing the degree of the non-linearity. When first activated the non-linear processing according to the above equation may be carried out, e.g., with $\alpha = 0.7$.

The degree of the non-linearity $\alpha$ can, however, be adapted rather than it is constant throughout the communication process. In fact, the system distance D(n)

$$D(n) = 10 \log_{10}\left(\frac{N}{N_T}\sum_{i=0}^{N_T-1}\left(\hat{h}^2{}_{1,i}(n) + \hat{h}^2{}_{2,i}(n)\right)\right)$$

is periodically determined 6, where N is the length of the echo compensation filtering means used for echo compensation, $N_T$ is a pre-determined number of sampling times and $h_1(n)$ and $h_2(n)$ denote the filter coefficients of the echo compensation filtering means for the first and the second channel, respectively.

The system distance is a measure for the performance of the employed echo compensation filtering means. The better the echo compensation is achieved the lower the degree of the non-linearity is chosen. By controlling $\alpha(n)$ on the basis of the system distance, artifacts in the processed audio signals can be kept low. A mapping from the system distance to $\alpha(n)$ to be chosen suitably for the non-linear processing can be performed by means of a stored appropriate characteristic or table. It is considered sufficient to re-determine the system difference only after the parameter $\beta$ of the above time-varying filtering has been varied (e.g. every one second).

As an example, in the above control process the parameter $\alpha(n)$ of the non-linear processing (in this case, a kind of half-wave rectifying) may be set 7 for one channel according to

$$\alpha(n) = \begin{cases} 0.7, & \text{if } D(n) > \text{-15dB,} \\ 0.5, & \text{if -15 dB} \geq D(n) > \text{-20dB,} \\ 0.3, & \text{if -20 dB} \geq D(n) > \text{-25 dB,} \\ 0.2, & \text{if -25 dB} \geq D(n) > \text{-30dB,} \\ 0.1, & \text{else.} \end{cases}$$

By the above mentioned example for controlling the de-correlating of multi channel signals after some seconds of communication the degree of the employed non-linearity can be reduced as much as necessary to avoid audible artifacts. If after a satisfying overall adaptation / performance of the employed echo compensation filtering means, the LRM system significantly changes, $\alpha(n)$ is increased again until echo compensation is again successful.

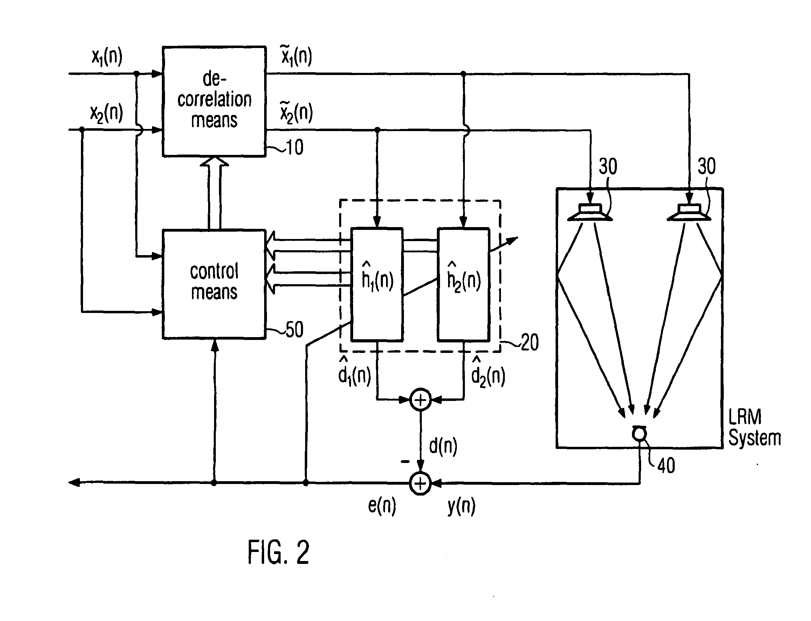

Figure 2 shows an illustration of the inventive systems for signal processing. Two acoustic signals, $x_1(n)$ of a first channel and $x_2(n)$ of a second channel, are received by a de-correlation means 10. The de-correlation means is configured to generate decorrelated signals $x_1(n)$ and $x_2(n)$ based on the received signals. The de-correlated signals are received by loudspeakers 30 being part of an LRM system. Loudspeaker signals generated by the loudspeakers 30 on the basis of the received de-correlated signals $x_1(n)$ and $x_2(n)$ are detected by a microphone 40 that generates a microphone signal y(n) based on the detected loudspeaker signals. In the shown example one of the loudspeakers 30 outputs a signal of one channel and the other loudspeaker outputs a signal of the other channel.

The signals $x_1(n)$ and $x_2(n)$ are also input in an echo compensation filtering means 20 that comprises filter coefficients $h_1(n)$ and $h_2(n)$ for the first and the second audio channel, respectively. The filter coefficients are adapted in order to model transfer functions of the LRM system. The estimates for the echo components for each channel $d_1(n)$ and $d_2(n)$ are added (d(n)) and subtracted from the microphone signal y(n). As a result an echo compensated signal e(n) is obtained.

However, according to the present example the acoustic input signals $x_1(n)$ and $x_2(n)$ are also received by a control unit 50. This unit is configured to determine the degree of correlation of the signals $x_1(n)$ and $x_2(n)$, e.g., by means of a method as described above that may be implemented in form of a software product running on a computer. If the degree of correlation is determined to be below a pre-determined threshold, the de-correlation means 10 is de-activated by the control means 50. In this case, the decorrelated signals $x_1(n)$ and $x_2(n)$ are identical to the received input signals $x_1(n)$ and $x_2(n)$, respectively. If the correlation exceeds some threshold de-correlation carried out by the de-correlation means in re-activated or enforced.

The control unit 50 also receives information about the adaptation state of the echo compensation filtering means 20 and the echo compensated signal e(n). Therefore, the control unit 50 can judge the adaptation performance of the echo compensation filtering means, e.g., on the basis of the system distance discussed above. In dependence on the adaptation performance, i.e. the effectiveness of the echo compensation, the impact of the de-correlation means 10, i.e. the degree of de-correlating the received audio signals $x_1(n)$ and $x_2(n)$, is controlled by the control means 50.

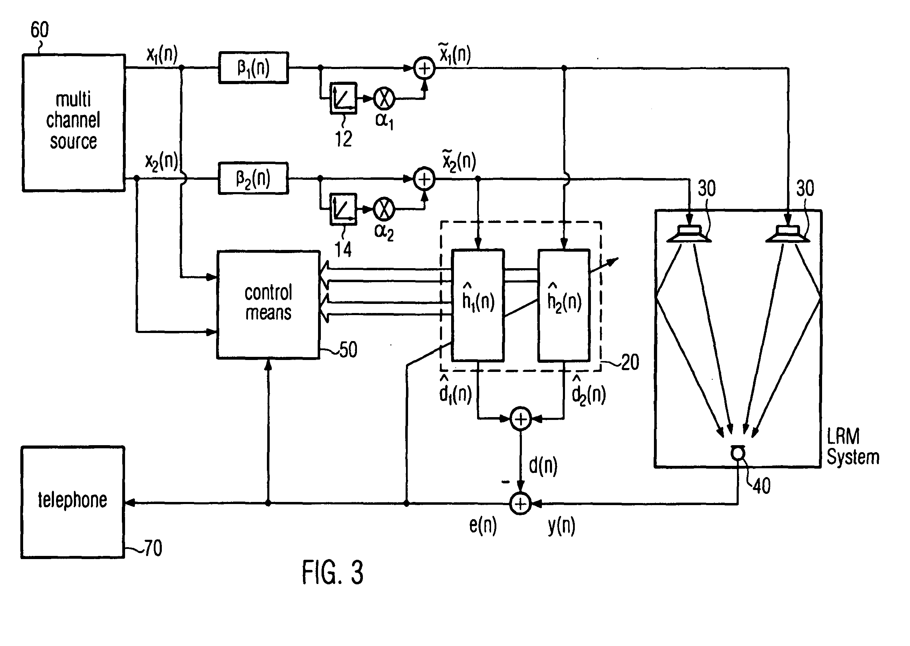

In Fig. 3 an example of the inventive system is illustrated in some more detail. Audio signals $x_1(n)$ and $x_2(n)$ are provided by a multi channel source 60. This source may be a radio or a CD player with two stereo channels. The wanted signal detected by the microphone 40 and enhanced by the echo compensation filtering means 20 is supplied to a telephone 70 for communication with a remote party. Signals of the remote party output by loudspeakers 30 after processing as well as signals from any other the multi channel source 60 are to be reduced as much as possible. Ideally, only utterances of a speaker using the microphone 40 were transmitted via the telephone 70 to the remote party.

As in the example of Fig. 2, de-correlated signals are received by the loudspeakers 30 to generate loudspeaker signals that are undesirably detected by the microphone 40 according to the transfer of the LRM system, e.g., in addition to a speaker's utterance intended to be submitted to a remote party. The corresponding microphone signal y(n) is echo compensated by an echo compensation filtering means 20. A control unit 50 determines the correlation of the multi channel signals $x_1(n)$ and $x_2(n)$ and only initiates the processing described below, if the determined correlation lies above a pre-determined significance level.

The signals $x_1(n)$ and $x_2(n)$ are de-correlated by means of a time-varying filtering means 11 and 13 and a half-wave rectifying means 12 and 14 provided for each channel. All-pass filter with time-varying parameters $\beta_{1,2}(n)$ are employed that operate as described with reference to Fig. 1. The filter coefficients of the filters are controlled by the control unit 50. It might be preferred that $\beta_{1,2}(n)$ are controlled on the basis of the performance of the echo compensation filtering means, in particular the system distance D(n), determined by the control unit as described above.

The filtered signals of both channels $x'_{1,2}(n)$ will be received by half-wave rectifying means 12 and 14 operating according to

to

$$\tilde{x}_{1,2}(n) = \begin{cases} (1+\alpha_{1,2})\, x'_{1,2}(n), & \text{if } x'_{1,2}(n) > 0 \\ \\ x'_{1,2}(n), & \text{else} \end{cases}$$

where the tilde denotes the eventually de-correlated signals and $\alpha$ is an arbitrary parameter representing the degree of the non-linearity controlled by the control means 50 (see also discussion above). In practical applications, after initiation of the decorrelation by the time-varying filtering means 11 and 13 and the non-linear processing means 12 and 14 $\alpha$ can be reduced to values that no longer result in perceivable artifacts due to the enforced de-correlation after only a few seconds.

Both examples shown in Figs. 2 and 3 can be generalized for an arbitrary number of individual channels in a straightforward manner.

All previously discussed embodiments are not intended as limitations but serve as examples illustrating features and advantages of the invention. It is to be understood that some or all of the above described features can also be combined in different ways.

**Claims**

1. Method for multi channel echo compensation, comprising

   providing a first audio signal ($x_1$) in a first channel and a second audio signal ($x_2$) in a second channel;
   de-correlating the first ($x_1$) and the second ($x_2$) audio signals to generate a first ($\tilde{x}_1$) de-correlated audio signal and a second ($\tilde{x}_2$) de-correlated audio signal;
   outputting the first de-correlated audio signal ($\tilde{x}_1$) by a first loudspeaker to generate a first loudspeaker signal and the second de-correlated audio signal ($\tilde{x}_2$) by a second loudspeaker to generate a second loudspeaker signal;
   detecting the first and second loudspeaker signals and a wanted signal by at least one microphone to generate at least one microphone signal (y); and
   echo compensating the at least one microphone signal (y) by adapting the filter coefficients of an adaptive echo compensation filtering means to generate an echo compensated signal (e);
   **characterized in that**
   the de-correlating of the first ($x_1$) and the second ($x_2$) audio signals includes controlling the value of a time-varying parameter ($\beta$) on the basis of an adaptation state of the echo compensation filtering means (20) and generating the first and second de-correlated audio signals ($\tilde{x}_1$, $\tilde{x}_2$) by applying time-varying all-pass filtering followed by adaptive non-linear processing to the provided first and second audio signals ($x_1$, $x_2$), said time-varying all-pass filtering using the time-varying parameter ($\beta$).

2. The method according to claim 1, further comprising controlling the value of a degree of non-linearity ($\alpha$) of the adaptive non-linear processing on the basis of the adaptation state of the adaptive echo compensation filtering means.

3. The method according to claim 2, further comprising determining the correlation of the first ($x_1$) and the second ($x_2$) audio signals and wherein the step of de-correlating the first ($x_1$) and the second ($x_2$) audio signals is controlled by the determined correlation of the first ($x_1$) and the second ($x_2$) audio signals.

4. The method according to claim 3, wherein the correlation is determined by calculating the short time correlation or short time coherence of the first ($x_1$) and the second ($x_2$) audio signals and wherein the step of de-correlating is controlled to be performed only if a value or a mean value of the short time correlation or the short time coherence exceeds a pre-determined threshold.

5. The method according to one of the preceding claims, wherein the adaptation state of the adaptive echo compensation filtering means (20) is determined on the basis of the echo-compensated signal (e) and/or the filter coefficients of the adaptive echo compensation filtering means (20).

6. The method according to claim 5, wherein the step of determining the adaptation state of the adaptive echo compensation filtering means (20) on the basis of the adapted filter coefficients of the adaptive echo compensation filtering means (20) is performed by calculating a system distance D(n) according to the formula

$$D(n) = 10 \log_{10}\left(\frac{N}{N_T} \sum_{i=0}^{N_T-1}\left(\hat{h}^2{}_{1,i}(n) + \hat{h}^2{}_{2,i}(n)\right)\right)$$

where n is the discrete time index, N is the length of the echo compensation filtering means, $N_T$ is a pre-determined number of sampling times and $\hat{h}_1(n)$ and $\hat{h}_2(n)$ denote the filter coefficients of the echo compensation filtering means for the first and the second channel, respectively.

7. The method according to one of the preceding claims, wherein the time-varying all-pass filtering is performed according to the following formula

$$x'(n) = -\beta(n)\,x(n) + x(n-1) + \beta(n)\,x'(n-1)$$

where $\beta$ is the time-varying parameter, n is the discrete time index, x is an audio signal of one channel and x' is the filtered audio signal.

8. The method according to one of the preceding claims, wherein the detecting of the first and second loudspeaker signals and the wanted signal is performed by more than one microphone arranged in at least one microphone array comprising at least one directional microphone and further comprising beamforming of the signals generated by the microphones to generate a beamformed microphone signal (y) as the at least one microphone signal.

9. Computer program product, comprising one or more computer readable media having computer-executable instructions for performing the steps of the method according to one of the claims 1-8.

10. System for multi channel echo compensation, comprising
a de-correlation means (10) configured to de-correlate a first and a second audio signal ($x_1$, $x_2$) provided in a first and a second channel by a multi channel source (60) and to generate a first and a second de-correlated audio signals ($\tilde{x}_1$, $\tilde{x}_2$) on the basis of the provided audio signals ($x_1$, $x_2$);
an adaptive echo compensation filtering means (20) configured to echo compensate at least one microphone signal generated on the basis of the de-correlated audio signals ($\tilde{x}_1$, $\tilde{x}_2$) to obtain an echo-compensated signal (e);
**characterized in that**
the de-correlation means (10) is configured to generate the de-correlated audio signals ($\tilde{x}_1$, $\tilde{x}_2$) by applying a time-varying all-pass filter (11) followed by an adaptive non-linear processing means to the audio signals ($x_1$, $x_2$), wherein the time-varying all-pass filter (11) has a time-varying parameter ($\beta$) and wherein the system further comprises a control means (50) configured to control the time-varying parameter ($\beta$) on the basis of an adaptation state of the echo compensation filtering means (20).

11. The system according to claim 10, wherein the adaptive non-linear processing means has a degree of non-linearity ($\alpha$) and wherein the control means (50) further comprises means configured to control the value of the degree of non-linearity ($\alpha$) on the basis of the adaptation state of the adaptive echo compensation filtering means (20).

12. The system according to claim 10 or 11, wherein the control means (50) is further configured to control the de-correlation means (10) on the basis of a correlation state of the audio signals ($x_1$, $x_2$) provided by the multi channel source (60).

13. The system according to one of the claims 10 - 12, wherein the control means (50) is configured to determine the adaptation state of the adaptive echo compensation filtering means (20) on the basis of the echo-compensated signal (e) and/or the filter coefficients of the adaptive echo compensation filtering means (20).

14. The system according to one of the claims 10-13. wherein the control means (50) is configured to determine the adaptation state of the adaptive echo compensation filtering means (20) on the basis of the system distance measure

$$D(n) = 10 \log_{10}\left(\frac{N}{N_T}\sum_{i=0}^{N_T-1}\left(\hat{h}^2_{1,i}(n) + \hat{h}^2_{2,i}(n)\right)\right)$$

where n is the discrete time index, N is the length of the echo compensation filtering means (20), $N_T$ is a pre-determined number of sampling times and $\hat{h}_1$, (n) and $\hat{h}_2$ (n) denote the filter coefficients of the adaptive echo compensation filtering means (20) for the first and the second channel, respectively.

15. The system according to one of the claims 10-14, wherein the time-varying all-pass filter is configured to filter according to the following formula

$$x'(n) = -\beta(n)\, x(n) + x(n-1) + \beta(n)\, x'(n-1)$$

where $\beta$ is the time-varying parameter, n is the discrete time index, x is an audio signal of one channel and x' is the filtered audio signal.

16. The system according to one of the claims 10-15, further comprising at least one microphone array comprising at least one directional microphone and a beamforming means configured to receive signals from the microphones of the at least one microphone array and to generate a beamformed microphone signal (y) as the at least one microphone signal.

17. Hands-free set comprising the system according to one of the claims 10 -15.

18. Speech recognition system comprising the system according to one of the claims 10 -17.

19. Vehicle communication system comprising the system according to one of the claims 10-16 and/or the hands-free set of claim 17 and/or the speech recognition system of claim 18.

20. Telephone or video conference system comprising one of the systems according to one of the claims 10 -16 and/or the hands-free set of claim 17.

**Patentansprüche**

1. Verfahren zur Multikanalechokompensation, das umfasst

   Bereitstellen eines ersten Audiosignals ($x_1$) in einem ersten Kanal und eines zweiten Audiosignals ($x_2$) in einem zweiten Kanal;

   Dekorrelieren des ersten ($x_1$) und des zweiten ($x_2$) Audiosignals, um ein erstes ($\tilde{x}_1$) dekorreliertes Audiosignal und ein zweites ($\tilde{x}_2$) dekorreliertes Audiosignal zu erzeugen;

   Ausgeben des ersten dekorrelierten Audiosignals ($\tilde{x}_1$) aus einem ersten Lautsprecher, um ein erstes Lautsprechersignal zu erzeugen, und des zweiten dekorrelierten Audiosignals ($\tilde{x}_2$) aus einem zweiten Lautsprecher, um ein zweites Lautsprechersignal zu erzeugen;

   Detektieren des ersten und des zweiten Lautsprechersignals und eines Nutzsignals mit zumindest einem Mikrofon, um zumindest ein Mikrofonsignal ($y$) zu erzeugen;

   Echokompensieren des zumindest einen Mikrofonsignals ($y$) durch Adaptieren der Filterkoeffizienten einer adaptiven Echokompensationsfiltereinrichtung, um ein echokompensiertes Signal ($e$) zu erzeugen;

   **dadurch gekennzeichnet, dass**

   das Dekorrelieren des ersten ($x_1$) und des zweiten ($x_2$) Audiosignals das Einstellen des Werts eines zeitabhängigen Parameters ($\beta$) auf der Grundlage eines Adaptionszustands der Echokompensationsfiltereinrichtung (20) und das Erzeugen des ersten und zweiten dekorrelierten Audiosignals ($\tilde{x}_1, \tilde{x}_2$) durch Anwenden einer zeitabhängigen Allpass-Filterung gefolgt von einer adaptiven nichtlinearen Verarbeitung auf das bereitgestellte erste und zweite Audiosignal ($x_1, x_2$) einschließt, wobei die genannte zeitabhängige Allpass-Filterung den zeitabhängigen Parameter ($\beta$) verwendet.

2. Das Verfahren gemäß Anspruch 1, das weiterhin das Einstellen des Werts eines Grads der Nichtlinearität ($\alpha$) der adaptiven nichtlinearen Verarbeitung auf der Grundlage des Adaptionszustands der Echokompensationsfiltereinrichtung umfasst.

3. Das Verfahren gemäß Anspruch 2, das weiterhin das Bestimmen der Korrelation des ersten ($x_1$) und des zweiten ($x_2$) Audiosignals umfasst, und in dem der Schritt des Dekorrelierens des ersten ($x_1$) und des zweiten ($x_2$) Audiosignals durch die bestimmte Korrelation des ersten ($x_1$) und des zweiten ($x_2$) Audiosignals gesteuert wird.

4. Das Verfahren gemäß Anspruch 3, in dem die Korrelation durch Berechnen der Kurzzeitkorrelation oder Kurzzeitkohärenz des ersten ($x_1$) und des zweiten ($x_2$) Audiosignals bestimmt wird, und in dem der Schritt des Dekorrelierens dahingehend gesteuert wird, dass er lediglich dann ausgeführt wird, wenn ein Wert oder ein Mittelwert der Kurzzeitkorrelation oder der Kurzzeitkohärenz eine vorbestimmte Schwelle überschreitet.

5. Das Verfahren gemäß einem der vorhergehenden Ansprüche, in dem der Adaptionszustand der adaptiven Echokompensationsfiltereinrichtung (20) auf der Grundlage des echokompensierten Signals ($e$) und/oder der Filterkoeffizienten der adaptiven Echokompensationsfiltereinrichtung (20) bestimmt wird.

6. Das Verfahren gemäß Anspruch 5, in dem der Schritt des Bestimmens des Adaptionszustands der Echokompensationsfiltereinrichtung (20) auf der Grundlage der adaptierten Filterkoeffizienten der adaptiven Echokompensationsfiltereinrichtung (20) durch Berechnen eines Systemabstands $D(n)$ gemäß der Formel

$$D(n) = 10 \log_{10}\left(\frac{N}{N_T} \sum_{i=0}^{N_T-1}\left(\hat{h}^2{}_{1,i}(n) + \hat{h}^2{}_{2,i}(n)\right)\right)$$

ausgeführt wird, in der $n$ der diskrete Zeitindex ist, $L$ die Länge der Echokompensationsfiltereinrichtung ist, $N_T$ eine vorbestimmte Anzahl an Abtastzeiten ist, und $\hat{h}_1(n)$ und $\hat{h}_2(n)$ die Filterkoeffizienten der Echokompensationsfiltereinrichtung für den ersten bzw. den zweiten Kanal bezeichnen.

7. Das Verfahren gemäß einem der vorhergehenden Ansprüche, in dem die zeitabhängige Allpass-Filterung gemäß der folgenden Formel ausgeführt wird

$$x'(n) = -\beta(n)\,x(n) + x(n-1) + \beta(n)\,x'(n-1)$$

in der $\beta$ der zeitabhängige Parameter ist, n der diskrete Zeitindex ist, x ein Audiosignal eines Kanals ist und x' das gefilterte Audiosignal ist.

8. Das Verfahren gemäß einem der vorhergehenden Ansprüche, in dem das Detektieren des ersten und zweiten Lautsprechersignals und des Nutzsignals von mehr als einem Mikrofon ausgeführt wird, die in zumindest einer Mikrofonanordnung angeordnet sind, die zumindest ein Richtmikrofon umfasst, und das weiterhin Beamforming der Signale umfasst, die von den Mikrofonen erzeugt werden, um ein gebeamformtes Mikrofonsignal (y) als das zumindest eine Mikrofonsignal zu erzeugen.

9. Computerprogrammprodukt, das ein oder mehrere computerlesbare Medien umfasst, die computerausführbare Anweisungen zum Ausführen der Schritte des Verfahrens gemäß einem der Ansprüche 1-8 aufweisen.

10. System zur Multikanalechokompensation, das umfasst
eine Dekorreliereinrichtung (10), die dazu ausgebildet ist, ein erstes und ein zweites Audiosignal ($x_1$, $x_2$) zu dekorrelieren, die von einer Multikanalquelle (60) in einem ersten und einem zweiten Kanal bereitgestellt werden, und ein erstes und ein zweites dekorreliertes Audiosignal ($\tilde{x}_1$, $\tilde{x}_2$) auf der Grundlage der bereitgestellten Audiosignale ($x_1$, $x_2$) zu erzeugen;
eine adaptive Echokompensationsfiltereinrichtung (20), die dazu ausgebildet ist, das Echo zumindest eines Mikrofonsignal, das auf der Grundlage der dekorrelierten Audiosignale ($\tilde{x}_1$, $\tilde{x}_2$) erzeugt wird, zu kompensieren, um ein echokompensiertes Signal (e) zu erhalten;
**dadurch gekennzeichnet, dass**
die Dekorreliereinrichtung (10) dazu ausgebildet ist, die dekorrelierten Audiosignale ($\tilde{x}_1$, $\tilde{x}_2$) durch Anwenden eines zeitabhängigen Allpass-Filters (11) gefolgt von einer adaptiven nichtlinearen Verarbeitungseinrichtung auf die Audiosignale ($x_1$, $x_2$) zu erzeugen, wobei der zeitabhängige Allpass-Filter (11) einen zeitabhängigen Parameter ($\beta$) besitzt, und wobei das System weiterhin eine Steuereinrichtung (50) umfasst, die dazu ausgebildet ist, den zeitabhängigen Parameter ($\beta$) auf der Grundlage eines Adaptionszustands der Echokompensationsfiltereinrichtung (20) einzustellen.

11. Das System gemäß Anspruch 10, in dem die adaptive nichtlineare Verarbeitungseinrichtung einen Grad einer Nichtlinearität ($\alpha$) aufweist, und in dem die Steuereinrichtung (50) weiterhin eine Einrichtung umfasst, die dazu ausgebildet ist, den Wert des Grads der Nichtlinearität ($\alpha$) auf der Grundlage des Adaptionszustands der adaptiven Echokompensationsfiltereinrichtung (20) einzustellen.

12. Das System gemäß Anspruch 10 oder 11, in dem die Steuereinrichtung (50) weiterhin dazu ausgebildet ist, die Dekorreliereinrichtung (10) auf der Grundlage eines Korrelationszustands der Audiosignale ($x_1$, $x_2$), die von der Multikanalquelle (60) bereitgestellt werden, zu steuern.

13. Das System gemäß einem der Ansprüche 10 - 12, in dem die Steuereinrichtung (50) dazu ausgebildet ist, den Adaptionszustand der adaptiven Echokompensationsfiltereinrichtung (20) auf der Grundlage des echokompensierten Signals (e) und/oder der Filterkoeffizienten der adaptiven Echokompensationsfiltereinrichtung (20) zu bestimmen.

14. Das System gemäß einem der Ansprüche 10 -13, in dem die Steuereinrichtung (50) dazu ausgebildet ist, den Adaptionszustand der adaptiven Echokompensationsfiltereinrichtung (20) auf der Grundlage des Systemabstands

$$D(n) = 10\,\log_{10}\left(\frac{N}{N_T}\sum_{i=0}^{N_T-1}\left(\hat{h}^2_{1,i}(n) + \hat{h}^2_{2,i}(n)\right)\right)$$

zu bestimmen, wobei n der diskrete Zeitindex ist, L die Länge der Echokompensationsfiltereinrichtung ist, $N_T$ eine vorbestimmte Anzahl an Abtastzeiten ist, und $\hat{h}_1(n)$ und $\hat{h}_2(n)$ die Filterkoeffizienten der adaptiven Echokompensationsfiltereinrichtung (20) für den ersten bzw. den zweiten Kanal bezeichnen.

15. Das System gemäß einem der Ansprüche 10 - 14, in dem der zeitabhängige Allpass-Filter dazu ausgebildet ist, gemäß der folgenden Formel zu filtern

$$x'(n) = -\beta(n)\, x(n) + x(n-1) + \beta(n)\, x'(n-1)$$

in der β der zeitabhängige Parameter ist, n der diskrete Zeitindex ist, x ein Audiosignal eines Kanals ist und x' das gefilterte Audiosignal ist.

16. Das System gemäß einem der Ansprüche 10 -15, das weiterhin zumindest eine Mikrofonanordnung umfasst, die zumindest ein Richtmikrofon und eine Beamformer-Einrichtung, die dazu ausgebildet ist, Signale von den Mikrofonen der zumindest einen Mikrofonanordnung zu empfangen und ein gebeamformtes Mikrofonsignal (y) als das zumindest eine Mikrofonsignal zu erzeugen, umfasst.

17. Freihandeinrichtung, die das System gemäß einem der Ansprüche 10-15 umfasst.

18. Spracherkennungssystem, das das System gemäß einem der Ansprüche 10-17 umfasst.

19. Fahrzeugkommunikationssystem, das das System gemäß einem der Ansprüche 10 -16 und/oder die Freihandeinrichtung von Anspruch 17 und/oder das Spracherkennungssystem von Anspruch 18 umfasst.

20. Telefon- oder Videokonferenzsystem, das das System gemäß einem der Ansprüche 10-16 und/oder die Freihandeinrichtung von Anspruch 17 umfasst.

**Revendications**

1. Procédé de compensation d'écho multicanal, comprenant les étapes consistant à :

fournir un premier signal audio ($x_1$) sur un premier canal et un deuxième signal audio ($x_2$) sur un deuxième canal ;
décorréler les premier ($x_1$) et deuxième ($x_2$) signaux audio pour générer un premier signal audio décorrélé ($\tilde{x}_1$) et un deuxième signal audio décorrélé ($\tilde{x}_2$) ;
délivrer le premier signal audio décorrélé ($\tilde{x}_1$) par un premier haut-parleur pour générer un premier signal de haut-parleur et le deuxième signal audio décorrélé ($\tilde{x}_2$) par un deuxième haut-parleur pour générer un deuxième signal de haut-parleur ;
détecter les premier et deuxième signaux de haut-parleurs et un signal voulu par au moins un microphone pour générer au moins un signal de microphone (y) ; et
compenser l'écho dudit au moins un signal de microphone (y) en adaptant les coefficients de filtrage de moyens de filtrage de compensation d'écho adaptatifs pour générer un signal à écho compensé (e) ;
**caractérisé en ce que**
la décorrélation des premier ($x_1$) et deuxième ($x_2$) signaux audio comprend la commande de la valeur d'un paramètre variable dans le temps (β) sur la base d'un état d'adaptation des moyens de filtrage de compensation d'écho (20) et la génération des premier et deuxième signaux audio décorrélés ($\tilde{x}_1$, $\tilde{x}_2$) en appliquant un filtrage passe-tout variable dans le temps suivi d'un traitement non linéaire adaptatif aux premier et deuxième signaux audio ($x_1$, $x_2$) fournis, ledit filtrage passe-tout variable dans le temps utilisant le paramètre variable dans le temps (β).

2. Procédé selon la revendication 1, comprenant en outre la commande de la valeur d'un degré de non linéarité (α) du traitement non linéaire adaptatif sur la base de l'état d'adaptation des moyens de filtrage de compensation d'écho adaptatifs.

3. Procédé selon la revendication 2, comprenant en outre la détermination de la corrélation des premier ($x_1$) et deuxième ($x_2$) signaux audio, et dans lequel l'étape de décorrélation des premier ($x_1$) et deuxième ($x_2$) signaux audio est

commandée par la corrélation déterminée des premier ($x_1$) et deuxième ($x_2$) signaux audio.

4. Procédé selon la revendication 3, dans lequel la corrélation est déterminée par le calcul de la corrélation à court terme ou de la cohérence à court terme des premier ($x_1$) et deuxième ($x_2$) signaux audio, et dans lequel l'étape de décorrélation est commandée pour être effectuée uniquement si une valeur ou une valeur moyenne de la corrélation à court terme ou de la cohérence à court terme dépasse un seuil prédéterminé.

5. Procédé selon l'une des revendications précédentes, dans lequel l'état d'adaptation des moyens de filtrage de compensation d'écho adaptatifs (20) est déterminé sur la base du signal à écho compensé (e) et / ou des coefficients de filtrage des moyens de filtrage de compensation d'écho adaptatifs (20).

6. Procédé selon la revendication 5, dans lequel l'étape de détermination de l'état d'adaptation des moyens de filtrage de compensation d'écho adaptatifs (20) sur la base des coefficients de filtrage adaptés des moyens de filtrage de compensation d'écho adaptatifs (20) est effectuée en calculant une distance de système D(n) selon la formule

$$D(n) = 10 \log_{10} \left( \frac{N}{N_T} \sum_{i=0}^{N_T-1} \left( \hat{h}^2_{1,i}(n) + \hat{h}^2_{2,i}(n) \right) \right)$$

où n est l'index temporel discret, N est la longueur des moyens de filtrage de compensation d'écho, $N_T$ est un nombre de fois d'échantillonnage prédéterminé et $\tilde{h}_1$ (n) et $\tilde{h}_2$ (n) désignent les coefficients de filtrage des moyens de filtrage de compensation d'écho pour les premier et deuxième canaux, respectivement.

7. Procédé selon l'une des revendications précédentes, dans lequel le filtrage passe-tout variable dans le temps est effectué selon la formule suivante

$$x'(n) = -\beta(n)\, x(n) + x(n-1) + \beta(n)\, x'(n-1)$$

où $\beta$ est le paramètre variable dans le temps, n est l'index temporel discret, x est un signal audio d'un canal et x' est le signal audio filtré.

8. Procédé selon l'une des revendications précédentes, dans lequel la détection des premier et deuxième signaux de haut-parleurs et du signal voulu est effectuée par plusieurs microphones agencés en au moins un réseau de microphones comprenant au moins un microphone directionnel et comprenant en outre la formation en faisceau des signaux générés par les microphones pour générer un signal de microphone en forme de faisceau (y) en tant que dit au moins un signal de microphone.

9. Produit-programme informatique, comprenant un ou plusieurs supports pouvant être lus par un ordinateur comportant des instructions exécutables par un ordinateur pour effectuer les étapes du procédé selon l'une des revendications 1 à 8.

10. Système pour la compensation d'écho multicanal, comprenant :

des moyens de décorrélation (10) configurés pour décorréler des premier et deuxième signaux audio ($x_1$, $x_2$) fournis dans des premier et deuxième canaux par une source multicanal (60) et pour générer des premier et deuxième signaux audio décorrélés ($\tilde{x}_1$, $\tilde{x}_2$) sur la base des signaux audio ($x_1$, $x_2$) fournis ;
des moyens de filtrage de compensation d'écho adaptatifs (20) configurés pour compenser un écho d'au moins un signal de microphone généré sur la base des signaux audio décorrélés ($\tilde{x}_1$, $\tilde{x}_2$) pour obtenir un signal à écho compensé (e) ;
**caractérisé en ce que**
les moyens de décorrélation (10) sont configurés pour générer les signaux audio décorrélés ($\tilde{x}_1$, $\tilde{x}_2$) en appliquant un filtre passe-tout variable dans le temps (11) suivi de moyens de traitement non linéaire adaptatifs aux signaux audio ($x_1$, $x_2$), dans lequel le filtre passe-tout variable dans le temps (11) a un paramètre variable dans le temps

($\beta$), et dans lequel le système comprend en outre des moyens de commande (50) configurés pour commander le paramètre variable dans le temps ($\beta$) sur la base d'un état d'adaptation des moyens de filtrage de compensation d'écho (20).

**11.** Système selon la revendication 10, dans lequel les moyens de traitement non linéaire adaptatifs ont un degré de non linéarité ($\alpha$), et dans lequel les moyens de commande (50) comprennent en outre des moyens configurés pour commander la valeur du degré de non linéarité ($\alpha$) sur la base de l'état d'adaptation des moyens de filtrage de compensation d'écho adaptatifs (20).

**12.** Système selon la revendication 10 ou 11, dans lequel les moyens de commande (50) sont en outre configurés pour commander les moyens de décorrélation (10) sur la base d'un état de corrélation des signaux audio ($x_1$, $x_2$) fournis par la source multicanal (60).

**13.** Système selon l'une des revendications 10 à 12, dans lequel les moyens de commande (50) sont configurés pour déterminer l'état d'adaptation des moyens de filtrage de compensation d'écho adaptatifs (20) sur la base du signal à écho compensé (e) et / ou des coefficients de filtrage des moyens de filtrage de compensation d'écho adaptatifs (20).

**14.** Système selon l'une des revendications 10 à 13, dans lequel les moyens de commande (50) sont configurés pour déterminer l'état d'adaptation des moyens de filtrage de compensation d'écho adaptatifs (20) sur la base de la mesure de distance de système

$$D(n) = 10 \log_{10}\left(\frac{N}{N_T} \sum_{i=0}^{N_T-1} \left(\hat{h}^2_{1,i}(n) + \hat{h}^2_{2,i}(n)\right)\right)$$

où n est l'index temporel discret, N est la longueur des moyens de filtrage de compensation d'écho (20), $N_T$ est un nombre de fois d'échantillonnage prédéterminé et $\tilde{h}_1$, (n) et $\tilde{h}_2$ (n) désignent les coefficients de filtrage des moyens de filtrage de compensation d'écho adaptatifs (20) pour les premier et deuxième canaux, respectivement.

**15.** Système selon l'une des revendications 10 à 14, dans lequel le filtre passe-tout variable dans le temps est configuré pour effectuer un filtrage selon la formule suivante

$$x'(n) = -\beta(n)\, x(n) + x(n-1) + \beta(n)\, x'(n-1)$$

où ($\beta$) est le paramètre variable dans le temps, n est l'index temporel discret, x est un signal audio d'un canal et x' est le signal audio filtré.

**16.** Système selon l'une des revendications 10 à 15, comprenant en outre au moins un réseau de microphones comprenant au moins un microphone directionnel et des moyens de formation de faisceau configurés pour recevoir des signaux des microphones dudit au moins un réseau de microphones et pour générer un signal de microphone en forme de faisceau (y) en tant que dit au moins un signal de microphone.

**17.** Ensemble mains libres comprenant le système selon l'une des revendications 10 à 15.

**18.** Système de reconnaissance vocale comprenant le système selon l'une des revendications 10 à 17.

**19.** Système de communication de véhicule comprenant le système selon l'une des revendications 10 à 16 et / ou l'ensemble mains libres selon la revendication 17 et / ou le système de reconnaissance vocale selon la revendication 18.

**20.** Système de téléphone ou de visioconférence comprenant un des systèmes selon l'une des revendications 10 à 16 et / ou l'ensemble mains libres selon la revendication 17.

FIG. 1

FIG. 2

FIG. 3

**EP 1 855 457 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030021389 A1

- US 20030185402 A1

**Non-patent literature cited in the description**

- **E. HÄNSLER ; G. SCHMIDT.** Acoustic Echo and Noise Control. John Wiley & Sons, 2004
- **D.R. MORGAN ; J.L. HALL ; J. BENESTY.** Investigation of Several Types of Nonlinearities for Use in Acoustic Echo Cancellation. *IEEE Transactions on Speech and Audio Processing,* September 2001, vol. 9 (6), 686

- **A. SUGIYAMA ; Y. JONCOUR ; A. HIRANO.** A Stereo Echo Canceller with Correct Echo-Path Identification Based on an Input Sliding Technique. *IEEE Transactions on Signal Processing,* November 2001, vol. 49 (11), 2577
- **GRIFFITHS, L.J. ; JIM, C.W.** An alternative approach to linearly constrained adaptive beamforming. *IEEE Transactions on Antennas and Propagation,* 1982, vol. 30, 27